# EUROPÄISCHE PATENTSCHRIFT

(11) **EP 1 283 926 B1**
(45) Veröffentlichungstag und Bekanntmachung des Hinweises auf die Patenterteilung: **11.07.2007**
(21) Anmeldenummer: 01943073.5
(22) Anmeldetag: 15.05.2001
(51) Int. Cl.: E04C 2/16

(54) **TAFELFÖRMIGES HOLZVERBUNDELEMENT**
PANEL-SHAPED COMPOSITE WOODEN ELEMENT
ELEMENT SANDWICH EN BOIS EN FORME DE PANNEAU

(30) Priorität: 25.05.2000 DE 20009571 U
(43) Veröffentlichungstag der Anmeldung: 19.02.2003
(73) Patentinhaber: Fraunhofer-Gesellschaft zur Förderung der angewandten Forschung e.V., 80686 München (DE)
(72) Erfinder: HERLYN, Johann, Wilhelm, 38108 Braunschweig (DE)
(74) Vertreter: Gerstein, Hans Joachim
(86) Internationale Anmeldenummer: PCT/DE2001/001830
(87) Internationale Veröffentlichungsnummer: WO 2001/090502

(56) Entgegenhaltungen:
- WO-A-89/08539
- DE-A- 19 616 510
- FR-A- 2 776 956
- GB-A- 1 399 402
- GB-A- 2 152 063
- US-A- 4 246 310
- US-A- 5 059 466
- US-A- 5 506 026
- HALASZ R.; SCHEER C.: 'Holzbau-Taschenbuch, Band 1: Grundlagen, Entwurf und Konstruktionen', 1986, VERLAG F?R ARCHITEKTUR UND TECHNISCHE WISSENSCHAFTEN, BERLIN

## Beschreibung

Die Erfindung betrifft ein tafelförmiges Holzverbundelement.

Holz und Holzwerkstoffe sind bewährte Baustoffe für die Herstellung von Gebäuden. Durch elementierte Konstruktionen mit einem hohen Anteil an Holz bzw. Holzwerkstoffen kann ein hoher Vorfertigungsgrad erreicht werden, der ein kostengünstiges und umweltverträglich Bauen ermöglicht.
Holzwerkstoffe haben im Gegensatz zu Vollholz nicht den Nachteil anisotroper inhomogener Materialeigenschaften. Strukturorientierte Holzwerkstoffe können in einem Bauteil unter optimaler Ausnutzung ihrer Eigenschaften eingesetzt werden, wodurch ein wirtschaftlicher Materialeinsatz möglich wird.

Elementierte Konstruktionen aus Holzwerkstoffen sind herkömmlicherweise durch zwei Systeme geprägt, die Holztafelbauart und die Skelettbauart. Die ältere Bauart ist die Skelettbauart, deren Ursprung noch im Vorläufer des Fachwerkbaus, dem Ständerbau zu finden ist. Bei der Skelettbauart werden die vertikalen Lasten über geschossübergreifende Stützen aus Vollholz abgetragen. Zur Gebäudeaussteifung gegenüber horizontalen Lasten dienen vorrangig Streben oder Zugbänder in den Wänden. Es werden zum Teil Holzwerkstoffplatten ein- oder beidseitig auf den Skelettbauwänden montiert, die aber nicht bei der lasttragenden Funktion mit berücksichtigt werden.

Bei der Holztafelbauart hingegen wirken auch die Beplankungen, z.B. aus Holzwerkstoffplatten oder Gipsfaser- oder Gipskartonplatten, bei der Lastabtragung mit. Sie werden rechnerisch sowohl bei der Ausstreifung gegenüber horizontalen Lasten als auch bei der Lastabtragung der vertikalen Lasten berücksichtigt. Dadurch ist es möglich, für die lastabtragenden Rippen Hölzer mit geringeren Querschnittsflächen als bei der Skelettbauart einzusetzen. Bei Holztafelelementen wird eine Vollholz-Rippenkonstruktion mit plattenförmigen Holzvverkstoffen beplankt. Zur Wärmedämmung sind in den Zwischenräumen zwischen den Vollholzrippen Wärmedämmmaterialien aus Nicht-Hölzwerkstoffen eingebaut. Die Vollholz-Rippenkonstruktion hat zusammen mit der Holzwerkstoff-Beplankung eine tragende Funktion. Nachteilig ist der nahezu starr festgelegte Rippenabstand von etwa 0,625 m. Dadurch müssen für die Herstellung einer großen Fläche viele Einzelbauteile zusammengefügt werden. Zudem sind die bekannten Holztafelelemente nachteilig aus zahlreichen Baustoffen, wie z. B. Vollholz, Holzwerkstoffen, Dämmstoffen, Kunststofffolien, etc. mit jeweils speziellen Funktionen mit unterschiedlichen Fügetechniken hergestellt. Die Vielzahl von Baustoffen und Verbindungen führt zu einem hohen Aufwand bei der Herstellung der Holztafelelemente, beim Materialverbrauch sowie bei der Logistik. Ein weiterer Nachteil liegt in einer aufwändigen Entsorgung der Holztafelelemente.

Aus der WO 89/08539 A1 bzw. US 5 059 466 A1 ist ein Verfahren zum Herstellen einer Spanplatte bekannt, bei der die äußeren Schichten eine höhere Dichte aufweisen als der Kern. Die Rohdichte des Kerns liegt dabei stets unterhalb der Rohdichte der Deckschichten.

Aus der DE 196 16 510 A1 ist ein Bauelement für ein- und zweistöckige Wohnhäuser bekannt, das als eine körperliche Einheit mit statischer und isolierender Funktion ausgebildet ist, bei dem entsprechend ausgerichtete Pflanzenfasern sowie pflanzliche Füllstoffe im Inneren und an der Baueelementoberfläche mit Hilfe eines Binders verklebt sind.

Die US-A-4,246,310 beschreibt eine Holzwerkstoffplatte, die als Ersatz für Wellblechdächer eingesetzt werden kann. Die Holzspäne erstrecken sich im wesentlichen parallel zu der Oberfläche der Platte und sind in Längsrichtung annähernd gleich orientiert. Die Holzschnitzel bestehen aus Hartholz und haben eine unterschiedliche Dicke, je nach dem, ob sie Teil einer Kernschicht oder einer Deckschicht sind.

Aus der US-A-5,506,026 ist ein Holzverbundelemente mit den Merkmalen des Oberbegriffes bekannt.

Aufgabe der Erfindung war es, ein verbessertes tafelförmiges Holzverbundelement zu schaffen, das sowohl eine lastabtragende als auch eine wärmedämmende Funktion erfüllt.

Die Aufgabe wird durch ein tafelförmiges Holzverbundelement mit den Merkmalen des Anspruchs 1 gelöst.

Erfindungsgemäß ist somit ein Verbundquerschnitt vorgesehen, der nur aus Holzwerkstoffen besteht. Hierbei wird ausgenutzt, dass Holzwerkstoffie im Vergleich zu anderen Baustoffen eine hohe Festigkeit bei einer gleichzeitig geringen Rohdichte haben. Erfindungsgemäß sind die Holzwerkstoffe des Verbundquerschnitts jedoch nicht nur lastabtragend, sondern auch wärmedämmend. Hierzu ist die Rohdichte entsprechend geeignet. Durch die Verwendung nur von Holzwerkstoffen als ähnliche Basisrohstoffe, die sowohl an der Tragwirkung als auch an der wärmedämmenden Funktion beteiligt sind, wird ein verringerter Materialverbrauch ermöglicht. Es können leicht zu bearbeitende, großflächige Elemente in einem hohen Vorfertigungsgrad hergestellt werden.

Die Rohdichte des Kerns sollte maximal etwa 500 kg/m³ betragen, um eine ausreichende lastabtragende Funktion, aber auch eine wärmedämmende Wirkung zu gewährleisten. Zur Wärmedämmung sollte die Wärmeleitfähigkeit des Kerns weniger als 0,1 W/(mK) betragen.

Der Kern und/oder die Deckschichten sind jeweils aus einem Holzwerkstoffverbund mit Holzwerkstoffen mit unterschiedlichen Partikelstrukturen gebildet.

Mindestens eine der Deckschichten sollte einen höheren Wasserdampfdiffusiönswiderstand aufweisen, als die gegenüberliegende Deckschicht. Mindestens eine der Deckschichten sollte schwer entflammbar oder nicht brennbar sowie lastabtragend und/oder wärmedämmend sein. Auch hier sollte zur Gewährleistung der lastabtragenden Funktion die Deckschicht eine Rohdichte von mindestens etwa 500 kg/m³ und zur Gewährleistung einer wärmedämmenden Funktion eine Wärmeleitfähigkeit von zwischen 0,1 W/(mK) und 0,2 W/(mK) haben.

Auch die Ränder an den Außenkanten des Kerns haben mindestens eine Deckschicht. Die Ränder können zudem Verbindungselemente zum Koppeln aneinander stoßender Holzverbundelemente aufweisen.

Die Partikelstrukturen der jeweiligen Holzwerkstoffe können z.B. Fasern oder Späne sein, die mit verschiedenen Bindemitteln miteinander verbunden sind. Darüber hinaus ist es aufgrund des gleichen Ausgangsrohstoffs Holz möglich, den Verbund der Elemente mit einer einheitlichen Fügetechnik, z. B. einer Verleimung, herzustellen. Die Verbundquerschnitte können auch variierte Rohdichten aufweisen. So kann der Kern z.B. eine poröse Holzfaserplatte sein. Als Deckschichten können z.B. Spanplatten, mitteldichte Faserplatten (MDF) oder OSB-Platten, d.h. Oriented-Strand-Boards, oder Sperrholzplatten eingesetzt werden.

Die Erfindung wird nachfolgend anhand der beigefügten Zeichnungen näher erläutert. Es zeigen:
- Fig. 1 -: Horizontalabschnitt durch ein erfindungsgemässes tafelförmiges Holzverbundelement;
- Fig. 2 -: Horizontalschnitt eines herkömmlichen Holztafelelementes;
- Fig. 3 -: tafelförmiges Holzverbundelement mit einem einteiligen Kern und einer Deckschicht auf der Kernoberfläche;
- Fig. 4 -: tafelförmiges Holzverbundelement mit einem zweiteiligen Kern mit Luftschicht;
- Fig. 5-: tafelförmiges Holzverbundelement mit einem mehrteiligen Kern.

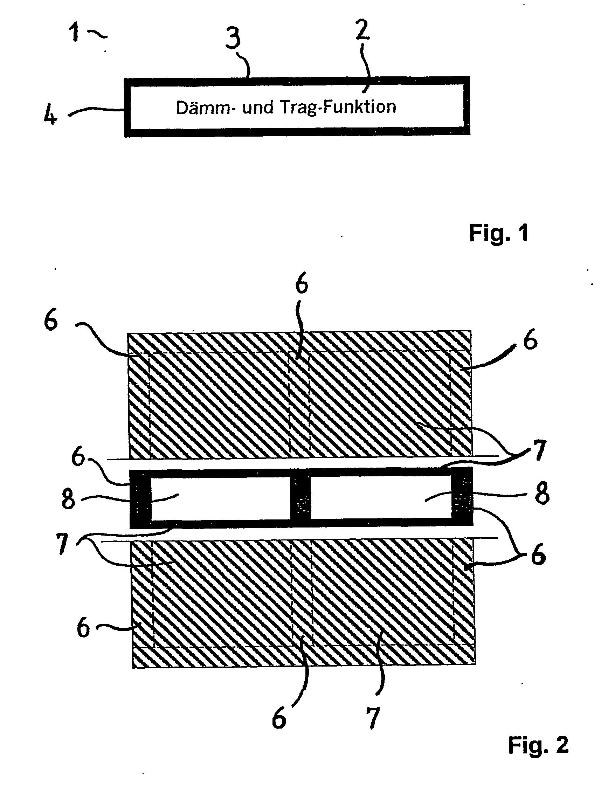

Die Fig. 1 lässt einen Horizontalschnitt durch das erfindungsgemäße tafelförmige Holzverbundelement 1 erkennen, die den prinzipiellen Aufbau des Verbundquerschnitts mit den Funktionen der Einzelkomponenten zeigt. Das modulare tafelförmige Holzverbundelement 1 besteht aus einem Kern 2 und Deckschichten 3 auf der Kernoberfläche und den Rändern als Randabschluss 4. Der Kern 2 ist so ausgebildet, dass er statische bzw, lastabtragende und gleichzeitig wärmeschutztechnische Aufgaben erfüllt. Die Deckschicht 3 erfüllt tragende und feuchteschutztechnische, gegebenenfalls auch feuerhemmende Aufgaben. Dabei sind die wärmedämmenden Holzwerkstoffe im Kern 2 auch an der Tragwirkung beteiligt.

Die tafelförmigen Holzverbundelemente 1 können z.B. als Wand-, Dach- oder Deckenelemente zum Bau von Fertighäusern eingesetzt werden, wobei Öffnungen für Fenster, Türen, Rollläden usw. leicht anzufertigen sind. Die Ränder an den Öffnungslaibungen sollten wie die Ränder an den Außenkanten mit einem Randabschluss 4 aus Holzwerkstoffen versehen werden. Die Holzverbundelemente 1 wirken dabei statisch sowohl zur Abtragung vertikaler Lasten als auch zur Aussteifung gegenüber Horizontallasten mit. Weiterhin werden Einzelkräfte aus Konsollasten und Horizontalstoß aufgenommen. Das Holzverbundelement 1 ist sowohl als Außen-, als auch als Innenwand einsetzbar. Zur Sicherstellung des Brand- und Wetterschutzes können zusätzliche Deckschichten bzw. weitere Bauteilschichten angebracht werden.

Der Randabschluss 4 ist ebenfalls aus Holzwerkstoffen gebildet. Er ist einerseits aus statischen Gründen erforderlich und gewährleistet eine tragende Funktion. Andererseits dient der Randabschluss 4 auch zur Montage und Verbindung der Holzverbundelemente.
Der Kern 2 und/oder die Deckschicht 3 ist aus Holzwerkstoffen gebildet, die unterschiedliche Partikelstrukturen, wie z.B. Fasern oder Späne, aufweisen und mit verschiedenen Bindemitteln miteinander verbunden sind. Als Bindemittel kommen organische und anorganische Stoffe zum Einsatz. Darüber hinaus ist es aufgrund des gleichen Ausgangsrohstoffs Holz möglich, den Verbund der Elemente mit einer einheitlichen Fügetechnik, z.B. einer Verleimung, herzustellen. Die Rohdichten der verwendeten Holzwerkstoffe können entsprechend der Anforderungen an die Dämm- bzw. Trageigenschaften variiert werden.

Im Querschnitt der Holzverbundelemente 1 können auch Höhlräume zur Aufnahme von haustechnischen Installationen und zur Einsparung von Material vorgesehen sein.

Die Verwendung von Holzverbundelementen 1 aus Holzwerkstoffen hat den Vorteil, dass zusätzliche Bauelemente mit geringem Aufwand mechanisch oder durch Verleimung an das Holzverbundelemente befestigt werden können.

In der Fig. 2 ist ein Horizontalschnitt durch ein herkömmliches Holztafelelement dargestellt. Das Holztafelelement ist im wesentlichen aus einer Vollholz-Rippenkonstruktion 6 gebildet, die mit Holzwerkstoffplatten 7 beplankt sind. Die Vollholz-Rippenkonstruktion 6 übt zusammen mit der Holzwerkstoff-Beplakung 7 eine tragende Funktion aus. Zur Wärmedämmung ist Dämmmaterial 8 zwischen der Vollholz-Rippenkonstruktion vorgesehen, das keine tragende Funktion ausübt und nicht aus Holzwerkstoff besteht.

Im Unterschied hierzu ist bei dem erfindungsgemäßen tafelförmigen Holzverbundelement 1 der Kern 2 so ausgebildet, dass er sowohl lastabtragende als auch wärmedämmende Eigenschaften hat. Eine gesonderte lediglich wärmedämmende Schicht 8 ist in dem Holzverbundelement 1 gemäß Fig. 1 nicht vorgesehen.

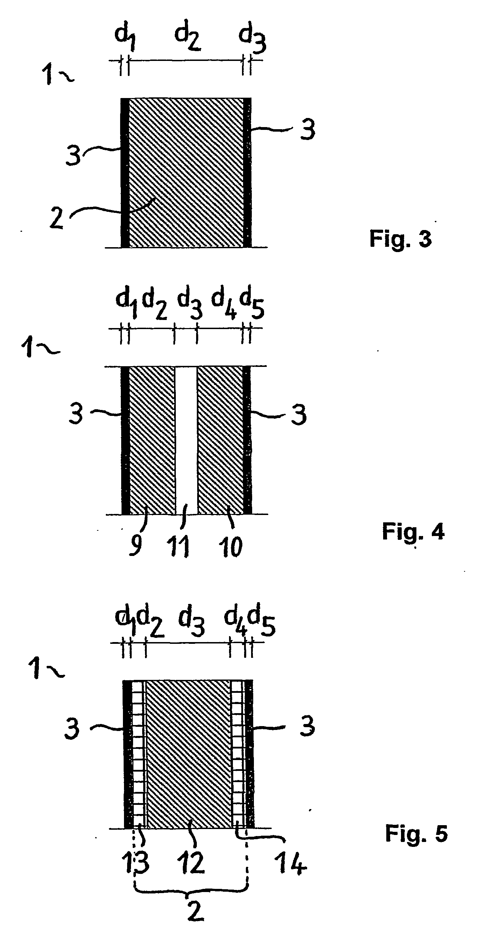

Die Fig. 3 lässt das erfindungsgemäße tafelförmige Holzverbundelement 1 erkennen, bei dem der Kern 2 aus einer porösen Holzfaserplatte gebildet ist. Die poröse Holzfaserplatte hat hierbei eine Rohdichte von maximal etwa 500 kg/m³ und eine Wärmeleitfähigkeit von weniger als 0,1 W/(mK). Die Kernoberfläche ist mit einer z.B. aufgeleimten Deckschicht 3 abgedeckt, die z.B. eine Spanplatte, eine mitteldichte Faserplatte, eine OSB-Platte (Oriented-Strand-Board) oder eine Sperrholzplatte ist.

Es ist vorteilhaft, wenn der Kern 2 ca. 50 bis 300 mm und die Deckschichten 3 ca. 60 bis 80 mm dick sind.

Die Fig. 4 lässt eine derartige Ausführungsform erkennen, bei dem z.B. zwei poröse Faserplatten 9, 10 vorgesehen sind, die parallel zueinander angeordnet sind und zwischen denen sich eine Luftschicht 11 befindet. Die Luftschicht 11 dient zur Wärmedämmung und zum Einbau von Versorgungsleitungen. Die Oberflächen der Kerne 9 und 10 sind wiederum mit einer Deckschicht 3 abgedeckt. Die Dicke der Kerne sollte jeweils 20 bis 200 mm betragen. Die Luftschicht 11 sollte etwa 10 bis 100 mm dick sein. Die Deckschichten 3 sollten wiederum ca. 6 bis 80 mm dick sein.

Die Fig. 5 lässt eine Ausführungsform des tafelförmigen Holzverbundelementes 1 erkennen, bei der der Kern 2 aus Holzwerkstoffen mit unterschiedlicher Rohdichte gebildet ist. Der Kern 2 besteht z.B. hierbei aus einer porösen Faserplatte 12, die jeweils von einer mitteldichten. Faserplatte 13, 14 abgedeckt ist. Die poröse Faserplatte 12 ist zusammen mit dem mitteldichten Faserplatten 13, 14 verleimt.

Die Dicke der porösen Faserplatte 12 sollte etwa 20 bis 200 mm betragen. Die mitteldichten Faserplatten (MDF) 13, 14 sollten ca. 10 bis 100 mm breit sein. Die Deckschichten sollten wiederum eine Dicke von 6 bis 80 mm aufweisen.

## Patentansprüche

1. Tafelförmiges Holzverbundelement (1) zur Verwendung als tragendes Tafelelement für den Hochbau, mit einem lastabtragenden und wärmedämmenden Kern (2), wobei mindestens eine separate Deckschicht (3) integral mit der Kernoberfläche verbunden ist, und der Kern (2) und die mindestens eine separate Deckschicht (3) jeweils aus einem Holzwerkstoff gebildet sind, wobei die Rohdichte des Kerns (2) für die lastabtragende Funktion maximal etwa 500 kg/m³ beträgt und die mindestens eine Deckschicht (3) lastabtragend ist und eine Rohdichte von mindestens etwa 500 kg/m³ hat, wobei der Kern (2) und/oder die mindesten eine separate Deckschicht (3) jeweils aus einem Verbund mit Holzwerkstoffen mit unterschiedlichen Partikelstrukturen gebildet ist, **dadurch gekennzeichnet, dass** die mindestens eine Deckschicht (3) auf den Rändern als Randabschluss (4) vorgesehen ist.

2. Tafelförmiges Holzverbundelement (1) nach Anspruch 1, **dadurch gekennzeichnet, dass** die Wärmeleitfähigkeit des Kerns (2) für die wärmedämmende Funktion weniger als 0,1 W(m/K) beträgt.

3. Tafelförmiges Holzverbundelement (1) nach Anspruch 1 oder 2, **dadurch gekennzeichnet, dass** die mindestens eine Deckschicht (3) einen höheren Wasserdampfdiffusionswiderstand aufweist als die gegenüberliegende Deckschicht.

4. Tafelförmiges Holzverbundelement (1) nach einem der vorhergehenden Ansprüche, **dadurch gekennzeichnet, dass** die mindestens eine Deckschicht (3) schwer entflammbar oder nicht brennbar ist.

5. Tafelförmiges Holzverbundelement (1) nach einem der vorhergehenden Ansprüche, d**adurch gekennzeichnet, dass** die mindestens eine Deckschicht (3) wärmedämmend ist und eine Wärmeleitfähigkeit von zwischen 0,1 W/(mK) und 0,2 W/(mK) hat.

6. Tafelförmiges Holzverbundelement (1) nach einem der vorhergehenden Ansprüche, **dadurch gekennzeichnet, dass** der Kern (2) aus mindestens einer porösen Faserplatte gebildet ist.

7. Tafelförmiges Holzverbundelement (1) nach einem der vorhergehenden Ansprüche, **dadurch gekennzeichnet, dass** die mindestens eine Deckschicht (3) eine Spanplatte ist.

8. Tafelförmiges Holzverbundelement (1) nach einem der vorhergehenden Ansprüche, **dadurch gekennzeichnet, dass** die mindestens eine Deckschicht (3) eine mitteldichte Faserplatte (MDF) ist.

9. Tafelförmiges Holzverbundelement (1) nach einem der vorhergehenden Ansprüche, **dadurch gekennzeichnet, dass** die mindestens eine Deckschicht (3) eine OSB-Platte, d.h. ein Oriented-Strand-Board, ist.

10. Tafelförmiges Holzverbundelement (1) nach einem der vorhergehenden Ansprüche, **dadurch gekennzeichnet, dass** die mindestens eine Deckschicht (3) eine Sperrholzplatte ist.

11. Tafelförmiges Holzverbundelement (1) nach einem der vorhergehenden Ansprüche, **dadurch gekennzeichnet, dass** Hohlräume zur Aufnahme von haustechnischen Installationen und/oder zur Materialeinsparung vorgesehen sind.

## Claims

1. Panel-shaped composite wooden element (1) for use as a supporting panel element for construction, with a load-transferring and thermally insulating core (2), at least one separate cover layer (3) being integrally connected to the core surface and the core (2) and the at least one separate cover layer (3) each being formed from a wood-based material, the apparent density of the core (2) for the load-transferring function being at maximum approximately 500 kg/m³ and the at least one cover layer (3) being load-transferring and having an apparent density of at least approximately 500 kg/m³, the core (2) and/or the at least one separate cover layer (3) being in each case formed from a composite comprising wood-based materials with different particle structures, **characterized in that** the at least one cover layer (3) is provided on the borders as a surround (4).

2. Panel-shaped composite wooden element (1) according to Claim 1, **characterized in that** the thermal conductivity of the core (2) for the thermally insulating function is less than 0.1 W/(mK).

3. Panel-shaped composite wooden element (1) according to Claim 1 or 2, **characterized in that** the at least one cover layer (3) has a higher resistance to water vapour diffusion than the opposite cover layer.

4. Panel-shaped composite wooden element (1) according to one of the preceding claims, **characterized in that** the at least one cover layer (3) has low flammability or is non-combustible.

5. Panel-shaped composite wooden element (1) according to one of the preceding claims, **characterized in that** the at least one cover layer (3) is thermally insulating and has a thermal conductivity of between 0.1W/ (mK) and 0.2 W/(mK).

6. Panel-shaped composite wooden element (1) according to one of the preceding claims, **characterized in that** the core (2) is formed from at least one porous fibreboard.

7. Panel-shaped composite wooden element (1) according to one of the preceding claims, **characterized in that** the at least one cover layer (3) is a chipboard.

8. Panel-shaped composite wooden element (1) according to one of the preceding claims, **characterized in that** the at least one cover layer (3) is a medium density fibreboard (MDF).

9. Panel-shaped composite wooden element (1) according to one of the preceding claims, **characterized in that** the at least one cover layer (3) is an oriented strand board (OSB).

10. Panel-shaped composite wooden element (1) according to one of the preceding claims, **characterized in that** the at least one cover layer (3) is a plywood board.

11. Panel-shaped composite wooden element (1) according to one of the preceding claims, **characterized in that** cavities are provided for the purpose of receiving house installations and/or for the purpose of saving material.

## Revendications

1. Elément composite en bois (1) en forme de panneau utilisable en tant qu'élément de panneau porteur dans le bâtiment comprenant un noyau (2) de reprise de charge et thermiquement isolant, dans lequel au moins une couche de couverture séparée (3) est reliée d'un seul tenant avec la surface supérieure du noyau le noyau (2) et ladite au moins une couche de couverture séparée (3) étant chacun réalisé en matière à base de bois, dans lequel la densité brute du noyau (2) pour la fonction de reprise de charge est au maximum de 500kg/m³ et ladite au moins une couche de couverture séparée (3) reprend la charge et présente une densité brute d'au moins 500kg/m³ dans lequel le noyau (2) et/ou ladite au moins une couche de couverture séparée (3) sont réalisés chacun par un composite de matières à base de bois ayant différentes structures de particules **caractérisé en ce que** ladite au moins une couche de couverture (3) est prévue sur les bords en tant que fermeture des bords (4).

2. Elément composite en bois (1) en forme de panneau selon la revendication 1, **caractérisé en ce que** la conductibilité thermique du noyau pour la fonction d'isolation thermique est inférieure à 0,1W(m/K).

3. Elément composite en bois (1) en forme de panneau selon la revendication 1 ou 2, **caractérisé en ce que** ladite au moins une couche de couverture (3) présente une résistance à la diffusion de vapeur d'eau supérieure à celle de la couche de couverture opposée.

4. Elément composite en bois (1) en forme de panneau selon l'une des revendications précédentes, **caractérisé en ce que** ladite au moins une couche de couverture (3) est difficilement combustible ou incombustible.

5. Elément composite en bois (1) en forme de panneau selon la revendication 1, **caractérisé en ce que** ladite au moins une couche de couverture (3) est thermiquement isolante et présente une conductibilité thermique comprise entre 0,1W/(mK) et 0,2W/(mK).

6. Elément composite en bois (1) en forme de panneau selon l'une des revendications précédentes, **caractérisé en ce que** le noyau (2) est constitué par au moins une plaque poreuse en fibres.

7. Elément composite en bois (1) en forme de panneau selon l'une des revendications précédentes, **caractérisé en ce que** ladite au moins une couche de couverture (3) est une plaque de copeaux.

8. Elément composite en bois (1) en forme de panneau selon l'une des revendications précédentes, **caractérisé en ce que** ladite au moins une couche de couverture (3) est une plaque en fibres (MDF) de densité moyenne.

9. Elément composite en bois (1) en forme de panneau selon l'une des revendications précédentes, **caractérisé en ce que** ladite au moins une couche de couverture (3) est une plaque du type OSB (Oriented-Strand-Board).

10. Elément composite en bois (1) en forme de panneau selon l'une des revendications précédentes, **caractérisé en ce que** ladite au moins une couche de couverture (3) est une plaque de contreplaqué.

11. Elément composite en bois (1) en forme de panneau selon l'une des revendications précédentes, **caractérisé en ce qu'**il comprend des espaces creux pour la réception d'installations techniques domestiques et/ou pour économiser de la matière.
